# EUROPEAN PATENT SPECIFICATION

(11) **EP 3 913 466 B1**
(45) Date of publication and mention of the grant of the patent: **13.12.2023**
(21) Application number: 20305528.0
(22) Date of filing: 20.05.2020
(51) Int. Cl.: G06F 1/26, G06F 1/28

(54) **SAFETY MONITORING OF POWER-UP AND/OR POWER-DOWN OF A POWER MANAGEMENT DEVICE**
SICHERHEITSÜBERWACHUNG DES EIN- UND/ODER AUSSCHALTENS EINER ENERGIEVERWALTUNGSVORRICHTUNG
SURVEILLANCE DE SÉCURITÉ DE LA MISE SOUS TENSION ET/OU DE LA MISE HORS TENSION D'UN DISPOSITIF DE GESTION D'ÉNERGIE

(43) Date of publication of application: 24.11.2021
(73) Proprietor: NXP USA, Inc., Austin TX 78735 (US)
(72) Inventor: HUREAU, Loic, 31023 Toulouse cedex 01 (FR); MEUNIER, Jean-Philippe, 31023 Toulouse cedex 01 (FR)
(74) Representative: Hardingham, Christopher Mark

(56) References cited:
- CN-A- 109 491 487
- US-A1- 2012 153 992
- US-A1- 2017 271 917
- US-B1- 6 333 650
- US-B1- 7 694 163

## Description

### Field

The present disclosure relates to power management devices, systems including power management devices, and methods of operating the same.

### Background

Modern power management devices and power management ICs (PMICs) often include safety features to ensure the proper monitoring and/or management of both the PMIC itself, and any externally connected regulators or converters and any application processor or other peripherals driven or powered by the PMIC, in case of an interruption to the power supply. This may include voltage monitoring of the one or more outputs from the power management PMIC. Safe power management is achieved by an independent safety monitoring unit (iSMU) which forms part of the PMIC power management processing.

Monitoring the device during power-up and power-down however remains a challenge.

Chinese patent application publication number CN109491487 discloses a multifunctional power sequence generator and a monitor chip, including: a controller, a communication unit, a storage unit, a power sequence generation unit, a sequence monitoring unit, and an abnormality processing unit; a controller; Invoke the work of the above-mentioned units to generate a multichannel power sequence to meet the power-on sequence problems of different systems, and to monitor the power sequence and turn on or off the chip or the corresponding channel when an error occurs.

### Summary

According to the invention there is a provided a power management device and a method of operating the power management device, as defined by the appended claims.

By providing a safety sequencer configured to store sequence data in the safety unit separate from, that is to say independent of, the storage of sequence data in the power management processing unit, the safety monitoring may be extended to include the power-up stage of the power management device, relatively independently from the power management processing unit. This may extend the capability of the safety unit. Typically, the safety unit is powered from one of the regulators or DC-DC converters on the power management processing unit; however, in other embodiments, the safety unit may be powered by a dedicated regulator. The safety processing unit is, in general terms a processing unit dedicated to monitoring for correct operation of the device.

These and other aspects of the invention will be apparent from, and elucidated with reference to, the embodiments described hereinafter.

### Brief description of Drawings

Embodiments will be described, by way of example only, with reference to the drawings, in which
figure 1 shows a block diagram of a power management device according to one or more embodiments of the present disclosure;
figure 2 shows a block diagram of the power management device of figure 1 in a system;
figure 3 shows a state machine diagram of each of a power management processing units and of a safety unit according to one or more embodiments;
figure 4 shows the start-up sequence of a power management device;
figure 5 shows a flow diagram of a method according to one or more embodiments; and
figure 6 shows a flow diagram of a further method according to one or more embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

### Detailed description of embodiments

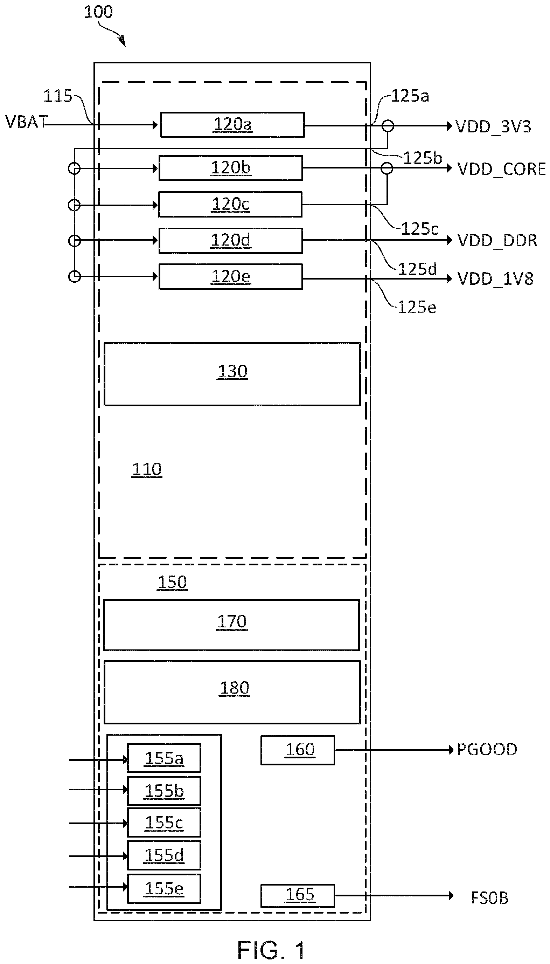

Figure 1 illustrates a power management device 100 according to one or more embodiments of the present disclosure. The power management device 100 may be implemented as a stand-alone integrated circuit, and thus may also be referred to as a power management integrated circuit (PMIC) or may form part of a larger, integrated device.

As shown, the power management device comprises two separate domains. A first domain is a power management processing unit 110, and the second domain is a safety unit 150.

The power management processing unit 110 comprises: an input 115 configured to receive current at an input voltage (VBAT). Input 115 may be connected in use to a battery for supplying an input power, typically at a battery voltage, to the PMIC. The power management processing unit 110 further comprises a plurality of power units, shown at 120a, 120b..120e, each configured to receive voltage or current from the input, and to supply voltage or current at a respective output voltage, shown at outputs 125a, 125b, ... 125e. The output voltages may all be different, or may, as shown in figure 1 at 125b and 125c sometimes be common, or parts of a multiphase regulator. Although typically all the DC-DC converters and regulators are integrated into the same integrated circuit, one or more of the converters or regulators of the power management device may be "off-chip". That is to say, they may be manufactured as either a separate IC, or having one or more of their component parts as external components, The term "device" as used herein, may thus cover two or more ICs, one of which is a main PMIC and the other or others comprise one or more regulators or DC-DC converters. The output voltages will depend on the application of the PMIC. For a non-limiting example application in which the PMIC is used to provide power to an application processor and at least one external memory device, in an automobile environment, the voltages may be chosen to be 3.3V (shown at V_{DD_3V3}), a core operating voltage of the application processor(shown at V_{DD_CORE}), a 1.8V supply (shown at V_{DD_1V8}), and a supply for Double Data Rate (DDR) memory... (shown at V_{DD_DDR}).

As will be familiar to the skilled person, the power units 120a, 120b, 120e may take various forms. In particular they may be implemented as DC-DC converters, or be implemented as other voltage regulators, such as so-called low drop out (LDO) voltage regulators. Other voltage regulators or other types of voltage regulators (not shown in figure 1) may be included in addition or as alternatives. The DC-DC converters are typically buck converters, but other type of DC-DC converters, such as boost converters, are not excluded. In the example application mentioned wherein the PMIC is used to power an applications processor and peripherals in an automobile environment, a high-voltage (HV) DC-DC buck converter 120a may be used to supply the 3.3 V output. Similarly, a DC-DC buck converter 120b may be used to supply the voltage DD_CORE for the application processor core. As will be familiar to the skilled person, two or more buck converters (two are shown -120b and 120c) may be used for this purpose with their outputs connected in common. Furthermore, a separate DC-DC buck converter 120d may be used to supply the DDR voltage. Finally, a LDO voltage regulator 120e may be used to supply the 1.8V supply. Of course, this example is nonlimiting and other numbers of power units, operating at the same or other voltages may be utilised depending on the specific application. The DC-DC and other regulators may all have, as their input, the input 115 for connection to VBAT; alternatively, and as shown, one or more of the DC-DC convertors, may be only indirectly connected to the input 115; for example, as shown, they may use the output of the HV DC-DC buck converter as their own input. Thus, for example, the lower voltage supplies may be provided with a smaller step-down ratio.

The power management processing unit also includes a main sequencer 130. As will be discussed in more detail hereinbelow, two of the functions of the main sequencer are to implement a power-up sequence in which the plurality of power units 120a, 120b,... 120e are powered up in a predetermined sequence and to implement a power-down sequence in which the plurality of power units are powered-down in a predetermined sequence. The main sequencer may also determine the ouput voltage of some or each of the regulators. The main sequencer may be implemented using non-volatile memory such as, without limitation, one-time programmable (OTP) memory. In such an example, during the customisation for the specific application, the power-up sequence instructions and the power-down sequence instructions are burnt into the OTP memory. The instructions can then be loaded into for example mirror registers to implement (in the case of the main sequencer), or monitor (in the case of the safety sequencer discussed in more detail below) the power-up and/or power-down.

As already mentioned, in addition to the power management processing unit 110, the power management device 100 or PMIC includes a second domain, being a safety unit 150. The safety unit 150 includes a plurality of voltage monitors 155a, 155b ..155e, each configured to monitor the output voltage of a respective one of the power units. That is to say, there is a voltage monitor associated with each of the power units. In one or more example embodiments, the voltage monitors are each implemented as a separate circuit - typically in the analogue domain. Each of voltage monitors is configured to be able to compare the output of the respective power unit with one or more threshold voltages. For instance, the voltage monitor may include an under-voltage threshold, which is compared with the respective output voltage in order to ensure that the power unit is providing power which is not too far below the design voltage. As a nonlimiting example, the under-voltage threshold for the 3.3 V supply may be set to be equal to 3.0 V, in order to be sure that the voltage is being supplied at no less than 90% of the design voltage. In other embodiments, other thresholds may be used. The threshold may be set as a percentage of the design voltage, or as an absolute difference from the design voltage. Similarly, the voltage monitor may be provided with an over-voltage threshold, in order to detect potentially damaging over-voltages. In the above nonlimiting example, the over-voltage threshold may be set to be 3.9 V, in order to be confident that the voltage is being supplied as no more than 120% of the design voltage. Again, in other embodiments, other thresholds may be used. The threshold may be set as a percentage of the design voltage, or as an absolute difference from the design voltage.

Whereas the voltage monitors have been described above as being physically distinct units arranged such that there is a separate voltage monitor for each of the power units, the skilled person will appreciate that in other embodiments, this may be a logical arrangement only, and the same physical circuitry may be implemented to operate as two or more of the voltage monitors. For example, a single circuit may be arranged so the same physical voltage monitor circuit may be switched between a plurality of circuit configurations to monitor the voltage of two or more of the power units. However, although this may save circuitry, in general it is not preferred, since there may be a delay between a failure in a particular circuit, and that circuit being multiplexed for monitoring: the consequent loss of "real time" monitoring may be, in some circumstances, not acceptable.

The safety unit further comprises a power-good unit 160, configured to provide a power-good output signal PGOOD indicative of normal operation of the power management device. The power-good output signal PGOOD is typically provided at an output pin of the PMIC, and may be used to reset the application processor when needed.

The safety unit further comprises a fail-state unit 165, configured to provide an output FSOB indicative of a fail-state of the power management device. The fail-state output signal FSOB is typically provided at an output pin of the PMIC, and may be used to notify the applications processor and/or other peripherals of a fault.

As already mentioned above, the safety unit may be powered from the power management processor unit, for instance from a dedicated LDO. Furthermore, the safety unit may generate its own power supplies.

According to one or more embodiments of the present disclosure, the safety unit further comprises a safety sequencer 170, configured to store sequence data. The sequence data includes the power-up sequence which is also stored in the main sequencer 130, and a safety processing unit 180. As a minimum the safety sequencer 170 stores the order in which the power units should power-up. The safety sequencer may in addition store further information. For example, the safety sequencer may store data corresponding to the under-voltage threshold for each of the power units. Furthermore, the safety sequencer may store data corresponding to the overvoltage threshold for each of the power units. Furthermore, the safety sequencer may store data corresponding to a power-down threshold - for example if a power unit is powered down, its output voltage will fall and the power-down threshold may correspond to the voltage below which the output must have fallen for the system to consider that the power unit has properly powered down. Moreover, in one or more embodiments, the safety sequencer may store timing information, such as time-limits: in particular, powering up a power unit takes a finite time: there may be a time limit by which time the power unit would have been expected to have fully powered up, and in the case that the output voltage from the power unit does not rise above the undervoltage threshold within this time limit, the safety processing unit 180 may report a fault. The skilled person will appreciate that the timing information may be baselined from a start of the overall power-up sequence, or relate to the expected or maximum time for an individual power unit power-up.

The safety processing unit 180 comprises a sequencer processing logic. The sequencer processing logic is configured to use the sequence data stored in safety sequencer to monitor the plurality of power units during the power-up sequence by means of the respective voltage monitors, and to provide an output to at least one of the power-good unit and the fail-state unit in response to the monitoring. The processing logic may be simple, for instance, it may just apply the comparisons. In one or more other embodiments, the processing logic may include additional functionality, for instance it may include latch functionality, or a timed-latch functionality.

The safety processing unit 180 may include other safety processing functions, such as will be familiar to the skilled person. In particular the safety processing unit 180 may include known functionality of an independent safety monitoring unit (iSMU). The safety monitoring unit is independent in the sense that its operation is not necessarily dependent on correct functioning of the power management processing unit. Typically in known safety power management devices and safety PMICs this logic unit monitors the state of the power unit such as DC-DC converters and LDO regulators using the voltage monitor 155a, 155b.. 155e during normal operation of the PMIC.

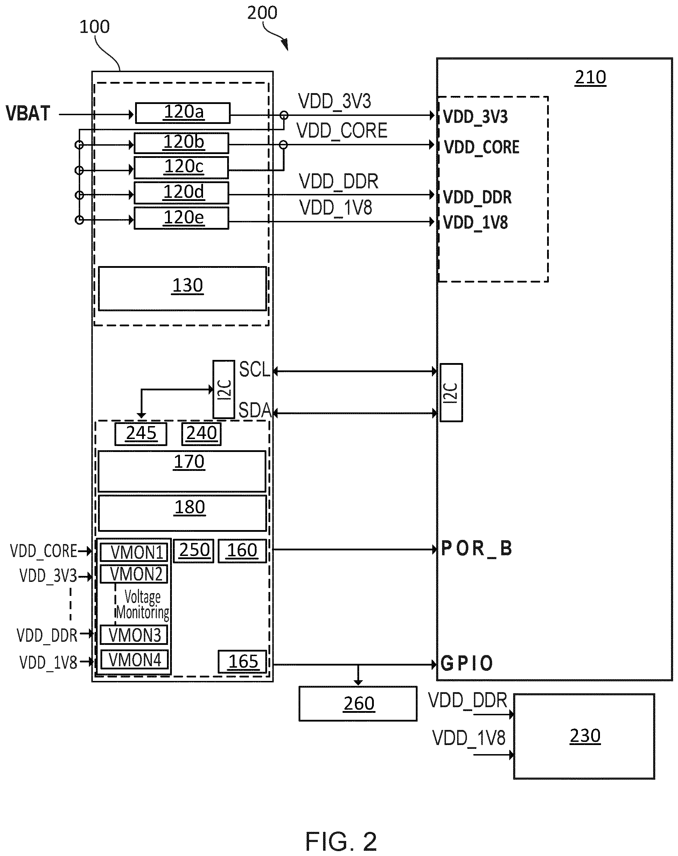

The safety unit may include an analogue built in self-test, ABIST, circuit (shown at 250 in figure 2) configured to test for the integrity and/or the correct operation of the voltage monitors. Furthermore, the safety unit may comprise a logic built in self-test, LBIST, circuit (shown at 240 in figure 2) configured to test for correct operation the safety monitoring unit and the safety sequencer. The LBIST circuit may check the integrity of the iSMU safety logic and the sequencer processing logic which may be integrated into the safety logic.

Turning now to figure 2, this shows a power management device 100 and in a system 200 which includes an application processor 210 and memory 230, according to one or more embodiments. The output of each of the power units within the power management device is provided to the application processor, in the example shown. In other embodiments, one or more outputs may be provided to other external devices such as external peripherals, for instance a controller area network (CAN) or ethernet device or an SD card, or the like. The memory device 230 is powered by the 1.8V supply along with the DDR supply. As mentioned above the power management device may include, in the safety processing domain or safety unit 150, an analogue built in self-test unit 250 (ABIST), for ensuring the integrity of the analogue circuits and in particular the voltage monitors 155. The power management device may also include, in the safety processing domain or safety unit 150, a logical built in self-test unit (LBIST) 240, for ensuring the integrity of the logical and/or digital circuit.

Also shown in figure 2 is a communication channel between the power management device and the application processor. As shown, the communication channel may be configured for I2C communication, with each of the power management device 100 and application processor 210 having an I2C interface 270 and 275 respectively. Where I2C interfaces are used, the connections are a clock line (SCL) and a data line (SDA). In other embodiments other communication links and/or other communication protocols might be used.

There may by a cyclic redundancy check 245, to checks that no data errors, such as flipped bits, occur in the transactions and communications between the power management device and the applications processor.

The power good output PGOOD 160 is connected to the applications processor 210 on the applications processor's power-on-reset pin POR_B, which typically is available to start or reset the device, and the output FSOB from the fail state unit 165 is connected to the application processor 210 on a general purpose input/output (GPIO) pin. This connection may be direct, or may be through an external peripheral, such as the system safe state transition unit mentioned below. The application processor is thereby enabled to take appropriate action on the discovery of a failure in the power management device. According to one or more embodiments this failure may include a failed power-up process.

The system may also include a system safe state transition unit 260. As will be familiar to the skilled person, such a unit may consist of additional logic or switches to transition the system in a controlled and known state. Without this, the system might be uncontrolled, depending on the nature of the failure.

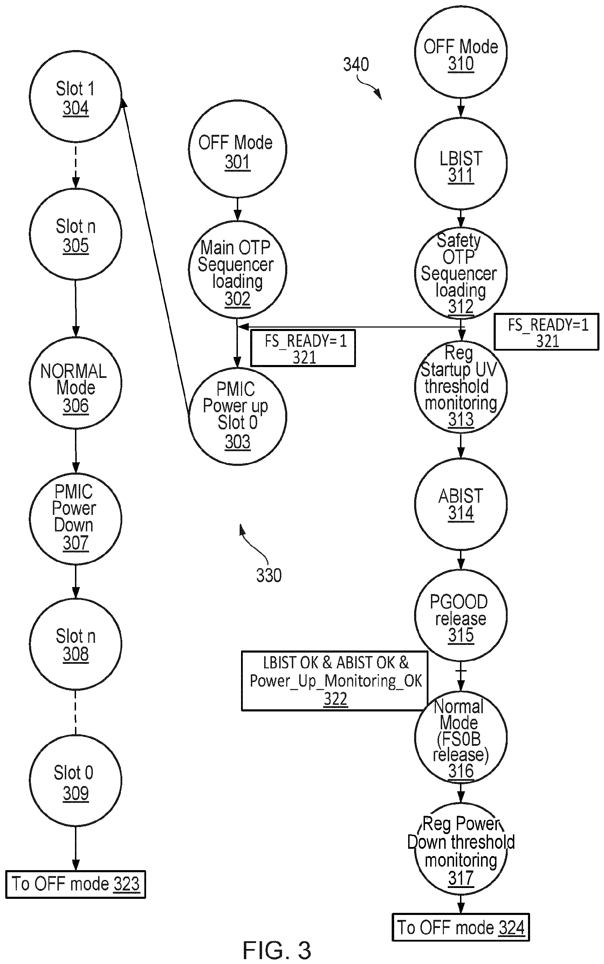

Turning now to figure 3, the figure shows state machines for both the power management processing 130 and the safety unit 108. The state machine 330 for the power management processing unit is generally on the left-hand side and the middle of the figure, and the state machine 340 for the safety unit is on the right-hand side of the figure.

The state machine for the power management processing unit is generally the same as for a conventional power management device: starting from an OFF mode 301, in this mode all of the power units of regulators are off, including the application processor under reset: typically, the PGOOD pin is used to maintain the application processor in the reset state; however, once the power-up sequence is complete, the PGOOD pin is released, which allows the application processor to start. The main sequencer is initiated at 302, by loading sequence information from the main sequencer into mirror registers from the non-volatile memory such as OTP memory. The initial power unit is powered up at 303. This power unit is conventionally considered to be in "slot 0" and the skilled person will be aware that it is conventional for this power unit to provide a 3.3 V supply. The remaining power units are then powered up with slot 1 being powered up at 304, through to the last power unit or units, in slot n, being powered up at 305. On completion of this the state machine moves to normal mode operation at 306. The power-down sequence is generally the reverse: so the state machine starts the power-down on receipt of a power-down command at 307, and powers down the power unit in the slots n at 308, and then sequentially powers-down the other power units until finally the first power unit in slot 0 is powered down at 309. The state machine then moves to OFF mode as shown at 323.

The state machine for the safety unit is shown at 340 on the right-hand side of figure 3. The safety unit starts in an off mode 310, and then may perform a logical built in self-test routine LBIST at 311. According to one or more embodiments of the present disclosure, the safety unit initiates the loading of the safety sequence from the non-volatile memory such as OTP memory in the safety sequencer as shown at 312 as "safety OTP sequencer loading". It should be noted that there is an independency between the state machines of the power management processing unit and the safety unit, that is to say that the power management processing unit is prevented from transitioning from state 302 ("main OTP sequencer loading") to state 303 (powering up the initial power unit), until the safety unit has completed step 312 ("safety OTP sequencer loading") and is ready to start monitoring. Each state machine may indicate that it has reached this state, for instance by setting a respective flag FS_READY to be true as shown at 321. The state machines may then transition to their next state - in the case of the power management processing unit this is state 303 in which the initial power unit is powered up, and in the case of the safety unit the state machine moves to state 313 in which the safety unit starts monitoring threshold voltages to determine when each power unit crosses the undervoltage threshold ("regulator start-up UV threshold monitoring").

Once all the power units have started up properly in the correct sequence (and optionally with the correct timing as discussed above) the safety unit state machine moves to the state 314 at which it may carry out an analogue built in self-test routine (ABIST). Upon successful completion of this the state machine moves to state 315 at which the power good unit is instructed to set the flag power good ("PGOOD release").

At this time the safety unit has confirmed that the LBIST is OK, the ABIST is OK and the Power-up monitoring is OK, as shown at 322. Thus, in one of more embodiments, even if one or other of the LBIST and ABIST fails, the PGOOD pin may be released - which may for instance allow from some debugging or diagnostics to take place, whilst the FSOB pin is not released.

The state machine then transitions to normal mode and instructs the fail-state unit to release FSOB, as shown at state 316.

The safety unit state machine remains in this state until the power management device starts to power-down the power units, at which point the safety state machine moves to state 317 ("regulator power-down threshold monitoring"). On successful completion of this process, the safety unit state machine moves to an OFF mode 324.

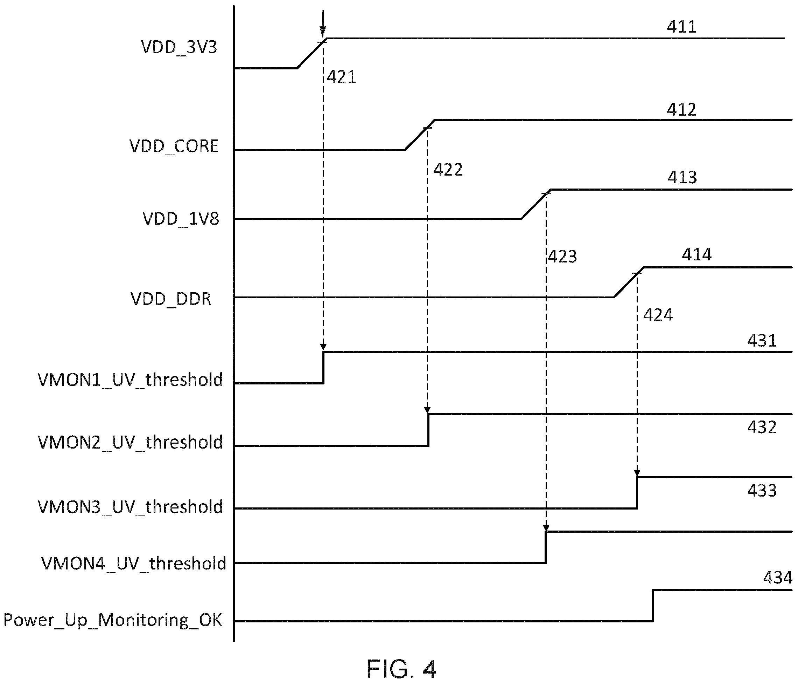

Figure 4 shows an example timeline of a successful start-up sequence for a power management device as shown in figure 1. The figure shows, at the top four curves, the output voltage from each of four power units or regulators, which are intended to be powered up in sequence. It also shows at the bottom four curves, signals associated with each of the voltage monitors. As can be seen at 411 the 3.3 V DC-DC converter is powered up first, and the voltage on its output ramps up from a low value (nominally zero) to the expected value (3.3 V). During this ramp up, the output voltage crosses the undervoltage threshold (which may be set to for instance 3.0 V as discussed above). This moment is shown as 421 on the figure. At this time the output VMON1_UV_THRESHOLD of the voltage monitor associated with the 3.3 V power supply comparing the output voltage with the undervoltage threshold goes high, as shown on curve 431.

Similarly, and after this unit is operational, the DC-DC converter or converters for VDD_CORE is or are powered up as shown at 412, and the voltage on its or their output ramps up from a low value (nominally zero) to the expected value (VDD_CORE). During this ramp up, the output voltage crosses the undervoltage threshold (which may be set to for instance 10% below the nominal voltage, as discussed above). This moment is shown as 422 on the figure. At this time the output VMON2_UV_ THRESHOLD of the voltage monitor associated with the VDD_CORE power supply comparing the output voltage with the undervoltage threshold goes high, as shown on curve 432.

Similarly, and after this or these units is or are operational, the power unit for VDD_1.8V (note that this may typically be an LDO) is powered up as shown at 413, and the voltage on its output ramps up from a low value (nominally zero) to the expected value (VDD_1V8). During this ramp up, the output voltage crosses the respective undervoltage threshold (which may be set to for instance 10% below the nominal voltage, as discussed above). This moment is shown as 423 on the figure. At this time the output VMON3_UV THRESHOLD of the voltage monitor associated with the VDD_1V8 power supply comparing the output voltage with the undervoltage threshold goes high, as shown on curve 433.

Finally (in this example) after this unit is operational, the DC-DC converter or converters for VDD_DDR is powered up as shown at 414, and the voltage on its output ramps up from a low value (nominally zero) to the expected value (VDD_DDR). During this ramp up, the output voltage crosses the respective undervoltage threshold (which may be set to for instance 10% below the nominal voltage, as discussed above). This moment is shown as 424 on the figure. At this time the output VMON4_UV_THRESHOLD of the voltage monitor associated with the VDD_DDR power supply comparing the output voltage with the undervoltage threshold goes high, as shown on curve 434.

Once all the power units have successfully powered up, and the safety unit has established that the output voltages have each passed the respective undervoltage threshold, the unit sets the flag Power_Up_Monitoring_OK to high. The skilled person will appreciate that this may be effected by suitable logic circuitry combining individual monitor flags for each slot or power unit, and the it's also possible to have a dedicated flag for each VMON for debug purposes.

The skilled person will appreciate that the timing diagram shown in figure 4 corresponds to one of the simplest embodiments discussed herein. In other embodiments, the threshhold monitor signals may not latch high when the threshold is passed - in such embodiments, even after the specific power unit has powered up, the monitor may detect and undervoltage if the power voltage from that unit subsequently dips below the threshold.

In other embodiments the timing diagram may include a time of which commences as each threshold signal 431,432, 433 goes high, and the power monitoring okay is latched low if the subsequent threshold signal does not pass go high within a predetermined time limit.

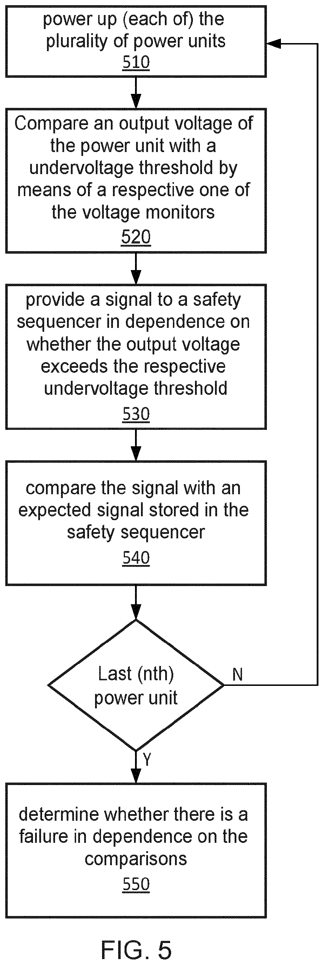

Figure 5 shows a flow diagram of a method according to the present disclosure. The method of operating a power management device, which comprises a power management processing unit having a plurality of power units, and a safety unit having a plurality of voltage monitors. The method comprises, at step 510, powering up each of the plurality of power units according to a predetermined sequence stored in a main sequencer.

While the power unit is being powered up, an output voltage of the respective power unit is compared with a respective undervoltage threshold by means of a respective one of the voltage monitors as (shown at 520), and a signal provided to a safety sequencer in dependence on whether the output voltage exceeds the respective undervoltage threshold (shown at 530).

The signals are compared to a set of expected signals stored in the safety sequencer (shown at 540); and it is determined whether there is a failure in dependence on the comparisons (at 550).

Determining whether there is a failure in dependence on the comparisons (at 550) may be done by: providing a power-good signal in response to all the respective signals matching the set of expected signals; and providing a fail-state signal in response to any of the respective signals not matching the set of expected signals.

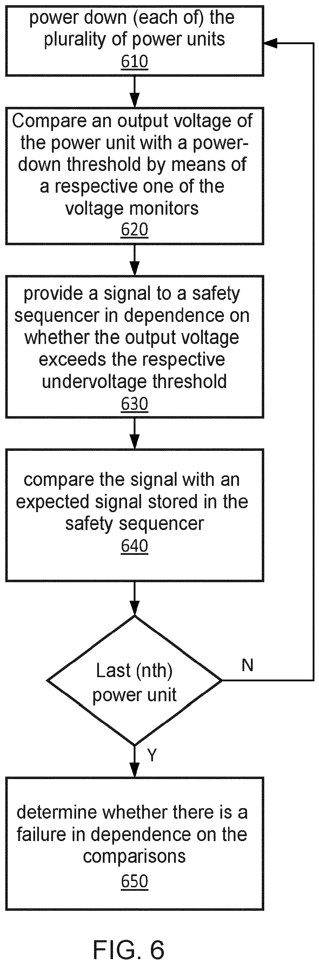

Figure 6 shows as flow diagram of a method according to the present disclosure. The method is a method of operating a power management device comprising a power management processing unit having a plurality of power units, and a safety unit having a plurality of voltage monitors. The method comprises: at step 610, powering down each of the plurality of power units according to a predetermined sequence stored in a main sequencer.

At step 620, output voltage of the respective power unit while it is being powered up is compared with a respective power-down voltage threshold by means of a respective one of the voltage monitors, and at step 630 a signal is provided to a safety sequencer in dependence on whether the output voltage exceeds the respective power-down threshold.

At step 620 the signals are compared with a set of expected signals stored in the safety sequencer; and at step 650 it is determined whether there is a failure in dependence on the comparisons.

Determining whether there is a failure in dependence on the comparisons is done by providing a power-down-good signal in response to all the respective signals matching the set of expected signals; and providing a fail-state signal in response to any of the respective signals not matching the set of expected signals.

## Claims

1. A power management device (100) comprising
a power management processing unit (110) and a separate safety unit (150);
the power management processing unit (110) comprising:
an input (115) configured to receive current at an input voltage (VBAT);
a plurality of power units (120a-e) each configured to supply current from the input (115) at a respective output (125a-e), and
a main sequencer (130) configured to implement a power-up sequence in which the plurality of power units (120a-e) are powered-up to supply said respective current in a predetermined sequence stored in the main sequencer (130);
the safety unit (150) comprising:
a plurality of voltage monitors (155a-e) each configured to monitor the output voltage of a respective one of the power units (120a-e);
a power-good unit (160), configured to provide a power-good output signal (PGOOD) indicative of normal operation of the power management device (100);
wherein the safety unit (150) further comprises a safety sequencer (170), distinct from the main sequencer (130) and configured to store sequence data; and
wherein the safety unit (150) further comprises a safety processing unit (180), configured to use the sequence data stored in the safety sequencer (170) to monitor the plurality of power units (120a-e) during the power-up sequence by means of the respective voltage monitors (155a-e), wherein the safety unit (150) further comprises a fail-state unit (165) configured to provide an output (FSOB) indicative of a fail-state of the power management device (100), and wherein the safety processing unit (180) is further configured to provide the output (FSOB) to at least one of the power-good unit (160) and the fail-state unit (165) in response to the monitoring.

2. A power management device (100) as claimed in claim 1,
wherein the safety unit comprises one-time programmable, OTP, memory (312).

3. A power management device (100) as claimed in claim 1 or 2,
wherein the main sequencer (130) is further configured to implement a power-down sequence in which the plurality of power units (120a-e) are powered-down in a predetermined sequence, and the safety processing unit is further configured to monitor the power units (120a-e) during the power-down sequence by means of the respective voltage monitors (155a-e), and to provide an output in response to the monitoring.

4. A power management device (100) as claimed in any preceding claim, wherein safety processing unit (180) is configured to monitor the plurality of power units (120a-e) during the power-up sequence by each voltage monitor (155a-e) comparing the output voltage of the respective power unit (120a-e) with a respective undervoltage threshold voltage, and the safety processing unit (180) is configured to provide a threshold-passed signal indicative of whether the output voltage exceeds the respective undervoltage threshold voltage.

5. A power management device (100) as claimed in claim 4,
wherein the safety sequencer (170) is configured to store an expected sequence in which the power units should power-up, and the safety processing unit is configured to provide an output to the power-good unit (160) in response to the threshold-passed signals indicating the power unit powers up in expected sequence, and to a fail-state unit (165) otherwise.

6. A power management device (100) as claimed in claim 4,
wherein the safety sequencer (170) is configured to store an expected power-up interval for each power unit, and the safety processing unit (180) is configured to provide an output to the power-good unit (160) in response to receiving each of the respective threshold-passed signals indicating the power units have powered up within the respective predetermined interval in the same sequence as the expected sequence unit, and to the fail-state unit (165) otherwise.

7. A power management device (100) as claimed in any preceding claim, wherein the safety processing unit (180) is configured to provide an output to the fail-state unit (165) in response to any one or more of the threshold-passed signals indicated that the respective power unit (120a-e) falls below the respective threshold after being powered up.

8. A power management device (100) as claimed in any preceding claim,
wherein the plurality of power units comprises a plurality of DC-DC converters and at least one low drop out, LDO, voltage regulator.

9. A power management device (100) as claimed in any preceding claim,
wherein the power management processing unit (110) further comprises a communication interface for communicating with an application processor, and wherein at least one of the plurality of power units (120a-e) are configured to provide power to the application processor.

10. An integrated circuit comprising a power management device (100) as claimed in any preceding claim.

11. A method of operating a power management device (100) according to claim 1, the method comprising:
powering up each of the plurality of power units (120a-e) according to the predetermined sequence stored in the main sequencer (130);
comparing an output voltage of the respective power unit (120a-e) while it is being powered up with a respective undervoltage threshold by means of a respective one of the voltage monitors (155a-e), and providing a respective signal to the safety sequencer (170), which is distinct from the main sequencer (130), in dependence on whether the output voltage exceeds the respective undervoltage threshold;
comparing the signals with a set of expected signals stored in the safety sequencer (170); and
determining whether there is a failure in dependence on the comparisons, wherein determining whether there is a failure in dependence on the comparisons comprises
providing a power-good signal (PGOOD) in response to all the respective signals matching the set of expected signals; and
providing a fail-state signal (FSOB) in response to any of the respective signals not matching the set of expected signals.

12. The method of claim 11, the method further comprising:
powering down each of the plurality of power units (120a-e) according to a predetermined sequence stored in the main sequencer (130);
comparing an output voltage of the respective power unit (120a-e) while it is being powered down with a respective power-down voltage threshold by means of a respective one of the voltage monitors (155a-e), and providing a signal to the safety sequencer (170) in dependence on whether the output voltage exceeds the respective power-down threshold;
comparing the signals with a set of expected signals stored in the safety sequencer (170); and
determining whether there is a failure in dependence on the comparisons,
wherein determining whether there is a failure in dependence on the comparisons comprises
providing a power-down-good signal (PGOOD) in response to all the respective signals matching the set of expected signals; and
providing a fail-state signal (FSOB) in response to any of the respective signals not matching the set of expected signals.

## Patentansprüche

1. Energieverwaltungsvorrichtung (100), umfassend
eine Energieverwaltungs-Verarbeitungseinheit (110) und eine separate Sicherheitseinheit (150);
wobei die Energieverwaltungs-Verarbeitungseinheit (110) umfasst:
einen Eingang (115), der dazu ausgelegt ist, Strom mit einer Eingangsspannung (VBAT) zu empfangen;
eine Mehrzahl von Energieeinheiten (120a-e), die jeweils dazu ausgelegt sind, Strom von dem Eingang (115) an einen jeweiligen Ausgang (125a-e) zu liefern, und einen Hauptsequenzer (130), der dazu ausgelegt ist, eine Einschalt-Sequenz zu implementieren, in der die Mehrzahl von Energieeinheiten (120a-e) eingeschaltet werden, um den jeweiligen Strom in einer vorbestimmten Sequenz zu liefern, die in dem Hauptsequenzer (130) gespeichert ist;
die Sicherheitseinheit (150) umfassend:
eine Mehrzahl von Spannungsmonitoren (155a-e), die jeweils dazu ausgelegt sind, die Ausgangsspannung einer jeweiligen der Energieeinheiten (120a-e) zu überwachen; eine Energie-Gut-Einheit (160), die dazu ausgelegt ist, ein Energie-Gut-Ausgangssignal (PGOOD) bereitzustellen, das für den normalen Betrieb der Energieverwaltungsvorrichtung (100) kennzeichnend ist;
wobei die Sicherheitseinheit (150) ferner einen Sicherheitssequenzer (170) umfasst, der sich von dem Hauptsequenzer (130) unterscheidet und dazu ausgelegt ist, Sequenzdaten zu speichern; und
wobei die Sicherheitseinheit (150) ferner eine Sicherheitsverarbeitungseinheit (180) umfasst, die dazu ausgelegt ist, die in dem Sicherheitssequenzer (170) gespeicherten Sequenzdaten zu verwenden, um die Mehrzahl von Energieeinheiten (120a-e) während der Einschaltsequenz mithilfe der jeweiligen Spannungsmonitore (155a-e) zu überwachen, wobei die Sicherheitseinheit (150) ferner eine Fehlerzustandseinheit (165) umfasst, die dazu ausgelegt ist, eine Ausgabe (FSOB) bereitzustellen, das kennzeichnend für einen Fehlerzustand der Energieverwaltungsvorrichtung (100) ist, und wobei die Sicherheitsverarbeitungseinheit (180) ferner dazu ausgelegt ist, die Ausgabe (FSOB) als Reaktion auf das Überwachen an mindestens eine der Energie-Gut-Einheit (160) und die Fehlerzustandseinheit (165) bereitzustellen.

2. Energieverwaltungsvorrichtung (100) nach Anspruch 1,
wobei die Sicherheitseinheit einen einmalig programmierbaren Speicher, OTP-Speicher, umfasst (312).

3. Energieverwaltungsvorrichtung (100) nach Anspruch 1 oder 2,
wobei der Hauptsequenzer (130) ferner dazu ausgelegt ist, eine Abschaltsequenz zu implementieren, bei der die Mehrzahl der Energieeinheiten (120a-e) in einer vorbestimmten Sequenz abgeschaltet werden, und die Sicherheitsverarbeitungseinheit ferner dazu ausgelegt ist, die Energieeinheiten (120a-e) während der Abschaltsequenz mithilfe der jeweiligen Spannungsmonitore (155a-e) zu überwachen und als Reaktion auf das Überwachen eine Ausgabe bereitzustellen.

4. Energieverwaltungsvorrichtung (100) nach einem der vorhergehenden Ansprüche,
wobei die Sicherheitsverarbeitungseinheit (180) dazu ausgelegt ist, die Mehrzahl der Energieeinheiten (120a-e) während der Einschaltsequenz dadurch zu überwachen, dass jeder Spannungsmonitor (155a-e) die Ausgangsspannung der jeweiligen Energieeinheit (120a-e) mit einer jeweiligen Unterspannungsschwellenspannung vergleicht, und die Sicherheitsverarbeitungseinheit (180) dazu ausgelegt ist, ein Schwellenwert-Bestanden-Signal bereitzustellen, das kennzeichnend dafür ist, ob die Ausgangsspannung die jeweilige Unterspannungsschwellenspannung überschreitet.

5. Energieverwaltungsvorrichtung (100) nach Anspruch 4,
wobei der Sicherheitssequenzer (170) dazu ausgelegt ist, eine erwartete Sequenz zu speichern, in der die Energieeinheiten einschalten sollten, und die Sicherheitsverarbeitungseinheit dazu ausgelegt ist, als Reaktion auf die Schwellenwert-Bestanden-Signale, die angeben, dass die Energieeinheit in der erwarteten Sequenz einschaltet, eine Ausgabe an die Energie-Gut-Einheit (160) und andernfalls an eine Fehlerzustandseinheit (165) bereitzustellen.

6. Energieverwaltungsvorrichtung (100) nach Anspruch 4,
wobei der Sicherheitssequenzer (170) dazu ausgelegt ist, ein erwartetes Einschaltintervall für jede Energieeinheit zu speichern, und die Sicherheitsverarbeitungseinheit (180) dazu ausgelegt ist, als Reaktion auf das Empfangen jedes der jeweiligen Schwellenwert-Bestanden-Signale, die angeben, dass die Energieeinheiten innerhalb des jeweiligen vorbestimmten Intervalls in der gleichen Reihenfolge wie die erwartete Sequenzeinheit eingeschaltet wurden, eine Ausgabe an die Energie-Gut-Einheit (160) und ansonsten an die Fehlerzustandseinheit (165) bereitzustellen.

7. Energieverwaltungsvorrichtung (100) nach einem der vorhergehenden Ansprüche,
wobei die Sicherheitsverarbeitungseinheit (180) dazu ausgelegt ist, eine Ausgabe an die Fehlerzustandseinheit (165) als Reaktion auf eines oder mehrere der Schwellenwert-Bestanden-Signale bereitzustellen, die angeben, dass die jeweilige Energieeinheit (120a-e) nach dem Einschalten unter den jeweiligen Schwellenwert fällt.

8. Energieverwaltungsvorrichtung (100) nach einem der vorhergehenden Ansprüche,
wobei die Mehrzahl der Energieeinheiten eine Mehrzahl von Gleichstrom-Gleichstrom-Wandlern und mindestens einen LDO-Spannungsregler (Low Drop Out) umfasst.

9. Energieverwaltungsvorrichtung (100) nach einem der vorhergehenden Ansprüche,
wobei die Energieverwaltungs-Verarbeitungseinheit (110) ferner eine Kommunikationsschnittstelle zum Kommunizieren mit einem Anwendungsprozessor umfasst, und wobei mindestens eine der Mehrzahl von Energieeinheiten (120a-e) dazu ausgelegt ist, dem Anwendungsprozessor Energie bereitzustellen.

10. Integrierten Schaltung, umfassend eine Energieverwaltungsvorrichtung (100) nach einem der vorhergehenden Ansprüche.

11. Verfahren zum Betreiben einer Energieverwaltungsvorrichtung (100) nach Anspruch 1, wobei das Verfahren umfasst:
Einschalten jeder der Mehrzahl von Energieeinheiten (120a-e) gemäß der vorbestimmten Sequenz, die im Hauptsequenzer (130) gespeichert ist;
Vergleichen einer Ausgangsspannung der jeweiligen Energieeinheit (120a-e), während sie eingeschaltet wird, mit einer jeweiligen Unterspannungsschwelle mithilfe eines jeweiligen der Spannungsmonitore (155a-e), und Bereitstellen eines jeweiligen Signals an den Sicherheitssequenzer (170), der sich von dem Hauptsequenzer (130) unterscheidet, in Abhängigkeit davon, ob die Ausgangsspannung die jeweilige Unterspannungsschwelle überschreitet;
Vergleichen der Signale mit einem Satz von erwarteten Signalen, die im Sicherheitssequenzer (170) gespeichert sind; und
Bestimmen, ob ein Fehler in Abhängigkeit von den Vergleichen vorliegt, wobei das Bestimmen, ob ein Fehler in Abhängigkeit von den Vergleichen vorliegt, umfasst
Bereitstellen eines Energie-Gut-Signals (PGOOD) als Reaktion darauf, dass alle jeweiligen Signale mit dem Satz der erwarteten Signale übereinstimmen; und Bereitstellen eines Fehlerzustandssignals (FSOB) als Reaktion darauf, dass eines der jeweiligen Signale nicht mit dem Satz der erwarteten Signale übereinstimmt.

12. Verfahren nach Anspruch 11, wobei das Verfahren ferner umfasst:
Abschalten jeder der Mehrzahl von Energieeinheiten (120a-e) gemäß einer vorbestimmten Sequenz, die im Hauptsequenzer (130) gespeichert ist;
Vergleichen einer Ausgangsspannung der jeweiligen Energieeinheit (120a-e), während sie abgeschaltet wird, mit einem jeweiligen Abschalt-Spannungsschwellenwert mithilfe eines jeweiligen der Spannungsmonitore (155a-e), und Bereitstellen eines Signals an den Sicherheitssequenzer (170) in Abhängigkeit davon, ob die Ausgangsspannung den jeweiligen Abschalt-Schwellenwert überschreitet;
Vergleichen der Signale mit einem Satz von erwarteten Signalen, die im Sicherheitssequenzer (170) gespeichert sind; und
Bestimmen, ob ein Fehler vorliegt, in Abhängigkeit von den Vergleichen,
wobei das Bestimmen, ob ein Fehler vorliegt, in Abhängigkeit von den Vergleichen umfasst
Bereitstellen eines Abschalt-Gut-Signals (PGOOD) als Reaktion darauf, dass alle jeweiligen Signale mit dem Satz der erwarteten Signale übereinstimmen; und Bereitstellen eines Fehlerzustandssignals (FSOB) als Reaktion darauf, dass eines der jeweiligen Signale nicht mit dem Satz der erwarteten Signale übereinstimmt.

## Revendications

1. Dispositif de gestion de puissance (100) comprenant une unité de traitement de gestion de puissance (110) et une unité de sécurité (150) séparée ;
l'unité de traitement de gestion de puissance (110) comprenant :
une entrée (115) configurée pour recevoir du courant à une tension d'entrée (VBAT) ;
une pluralité d'unités de puissance (120a-e) chacune configurée pour fournir du courant provenant de l'entrée (115) à une sortie respective (125a-e), et un séquenceur principal (130) configuré pour mettre en œuvre une séquence de mise sous tension dans laquelle la pluralité d'unités de puissance (120a-e) sont mises sous tension pour fournir ledit courant respectif dans une séquence prédéterminée stockée dans le séquenceur principal (130) ;
l'unité de sécurité (150) comprenant :
une pluralité de surveillances de tension (155a-e) chacune configurée pour surveiller la tension de sortie d'une unité respective parmi les unités de puissance (120a-e) ;
une unité d'alimentation valide (160), configurée pour fournir un signal de sortie d'alimentation valide (PGOOD) indiquant un fonctionnement normal du dispositif de gestion de puissance (100) ;
l'unité de sécurité (150) comprenant en outre un séquenceur de sécurité (170) distinct du séquenceur principal (130) et configuré pour stocker des données de séquence ; et
l'unité de sécurité (150) comprenant en outre une unité de traitement de sécurité (180), configurée pour utiliser les données de séquence stockées dans le séquenceur de sécurité (170) pour surveiller la pluralité d'unités de puissance (120a-e) pendant la séquence de mise sous tension au moyen des surveillances de tension (155a-e) respectives, l'unité de sécurité (150) comprenant en outre une unité d'état de défaillance (165) configurée pour fournir une sortie (FSOB) indiquant un état de défaillance du dispositif de gestion de puissance (100), et l'unité de traitement de sécurité (180) étant en outre configurée pour fournir la sortie (FSOB) à l'unité d'alimentation valide (160) et/ou à l'unité d'état de défaillance (165) en réponse à la surveillance.

2. Dispositif de gestion de puissance (100) selon la revendication 1,
l'unité de sécurité comprenant une mémoire programmable une seule fois, OTP, (312).

3. Dispositif de gestion de puissance (100) selon la revendication 1 ou 2,
le séquenceur principal (130) étant en outre configuré pour mettre en œuvre une séquence de mise hors tension dans laquelle la pluralité d'unités de puissance (120a-e) sont mises hors tension dans une séquence prédéterminée, et l'unité de traitement de sécurité étant en outre configurée pour surveiller les unités de puissance (120a-e) pendant la séquence de mise hors tension au moyen des surveillances de tension (155a-e) respectives, et pour fournir une sortie en réponse à la surveillance.

4. Dispositif de gestion de puissance (100) selon une quelconque revendication précédente,
l'unité de traitement de sécurité (180) étant configurée pour surveiller la pluralité d'unités de puissance (120a-e) pendant la séquence de mise sous tension par la comparaison par chaque surveillance de tension (155a-e) de la tension de sortie de l'unité de puissance (120a-e) respective avec une tension seuil de sous-tension respective, et l'unité de traitement de sécurité (180) étant configurée pour fournir un signal de dépassement de seuil indiquant si la tension de sortie dépasse ou non la tension seuil de sous-tension respective.

5. Dispositif de gestion de puissance (100) selon la revendication 4,
le séquenceur de sécurité (170) étant configuré pour stocker une séquence attendue dans laquelle les unités de puissances devraient se mettre sous tension, et l'unité de traitement de sécurité étant configurée pour fournir une sortie à l'unité d'alimentation valide (160) en réponse à l'indication par les signaux de dépassement de seuil de la mise sous tension de l'unité de puissance dans une séquence attendue, et à une unité d'état de défaillance (165) autrement.

6. Dispositif de gestion de puissance (100) selon la revendication 4,
le séquenceur de sécurité (170) étant configuré pour stocker un intervalle de mise sous tension attendu pour chaque unité de puissance, et l'unité de traitement de sécurité (180) étant configurée pour fournir une sortie à l'unité d'alimentation valide (160) en réponse à la réception de chacun des signaux de dépassement de seuil respectifs indiquant l'allumage des unités de puissance dans l'intervalle prédéterminé respectif dans la même séquence que l'unité de séquence attendue, et à l'unité d'état de défaillance (165) autrement.

7. Dispositif de gestion de puissance (100) selon une quelconque revendication précédente,
l'unité de traitement de sécurité (180) étant configurée pour fournir une sortie à l'unité d'état de défaillance (165) en réponse à l'indication par les un ou plusieurs des signaux de dépassement de seuil quelconques que l'unité de puissance (120a-e) respective descend en dessous du seuil respectif après sa mise sous tension.

8. Dispositif de gestion de puissance (100) selon une quelconque revendication précédente,
la pluralité d'unités de puissance comprenant une pluralité de convertisseurs CC-CC et au moins un régulateur de tension à faible tension de déchet, LDO.

9. Dispositif de gestion de puissance (100) selon une quelconque revendication précédente,
l'unité de traitement de gestion de puissance (110) comprenant en outre une interface de communication pour communiquer avec un processeur d'application, et au moins une parmi la pluralité d'unités de puissance (120a-e) étant configurée pour fournir de la puissance au processeur d'application.

10. Circuit intégré comprenant un dispositif de gestion de puissance (100) selon une quelconque revendication précédente.

11. Procédé de fonctionnement d'un dispositif de gestion de puissance (100) selon la revendication 1, le procédé comprenant :
la mise sous tension de chacune de la pluralité d'unités de puissance (120a-e) selon la séquence prédéterminée stockée dans le séquenceur principal (130) ;
la comparaison d'une tension de sortie de l'unité de puissance (120a-e) respective pendant qu'elle est mise sous tension avec un seuil de sous-tension respectif au moyen d'une surveillance respective parmi les surveillances de tension (155a-e), et la fourniture d'un signal respectif au séquenceur de sécurité (170), qui est distinct du séquenceur principal (130), en fonction de si la tension de sortie dépasse ou non le seuil de sous-tension respectif ;
la comparaison des signaux avec un ensemble de signaux attendus stockés dans le séquenceur de sécurité (170) ; et
la détermination de la présence ou non d'une défaillance en fonction des comparaisons, la détermination de la présence ou non d'une défaillance en fonction des comparaisons comprenant :
la fourniture d'un signal d'alimentation valide (PGOOD) en réponse à la correspondance de tous les signaux respectifs à l'ensemble de signaux attendus ; et
la fourniture d'un signal d'état de défaillance (FSOB) en réponse à la non-correspondance de l'un quelconque parmi les signaux respectifs à l'ensemble de signaux attendus.

12. Procédé selon la revendication 11, le procédé comprenant en outre :
la mise hors tension de chacune de la pluralité d'unités de puissance (120a-e) selon une séquence prédéterminée stockée dans le séquenceur principal (130) ;
la comparaison d'une tension de sortie de l'unité de puissance (120a-e) respective pendant sa mise hors tension avec un seuil de tension de mise hors tension respectif au moyen d'une surveillance respective parmi les surveillances de tension (155a-e), et la fourniture d'un signal au séquenceur de sécurité (170) en fonction de si la tension de sortie dépasse ou non le seuil de mise hors tension respectif ;
la comparaison des signaux avec un ensemble de signaux attendus stockés dans le séquenceur de sécurité (170) ; et
la détermination de la présence ou non d'une défaillance en fonction des comparaisons,
la détermination de la présence ou non d'une défaillance en fonction des comparaisons comprenant
la fourniture d'un signal de mise hors tension valide (PGOOD) en réponse à la correspondance de tous les signaux respectifs à l'ensemble de signaux attendus ; et
la fourniture d'un signal d'état de défaillance (FSOB) en réponse à la non-correspondance d'un quelconque des signaux respectifs à l'ensemble de signaux attendus.
